# EUROPÄISCHE PATENTSCHRIFT

(11) **EP 3 534 016 B1**
(45) Veröffentlichungstag und Bekanntmachung des Hinweises auf die Patenterteilung: **02.04.2025**
(21) Anmeldenummer: 19158785.6
(22) Anmeldetag: 22.02.2019
(51) Int. Cl.: F15B 13/02, F16K 17/30, F15B 20/00, F15B 15/20, B66F 9/22

(54) **LEITUNGSBRUCHSICHERUNG FÜR EINEN HYDRAULIKZYLINDER**
LINE BREAK SAFETY FEATURE FOR A HYDRAULIC CYLINDER
DISPOSITIF DE SÉCURITÉ ANTI-RUPTURE POUR CONDUITE POUR UN CYLINDRE HYDRAULIQUE

(30) Priorität: 28.02.2018 DE 102018104587
(43) Veröffentlichungstag der Anmeldung: 04.09.2019
(73) Patentinhaber: Jungheinrich Aktiengesellschaft, 22047 Hamburg (DE)
(72) Erfinder: Fischer, Kai, 22459 Hamburg (DE); Frey, Johannes Michael, 21493 Louisenhort (DE)
(74) Vertreter: Hauck Patentanwaltspartnerschaft mbB

(56) Entgegenhaltungen:
- EP-A1- 1 311 781
- EP-B1- 1 311 781
- CN-A- 104 006 195
- CN-A- 105 240 331
- CN-A- 106 402 087
- DD-A1- 19 369
- DD-A1- 56 605
- US-A- 3 228 658
- US-A- 3 807 442

## Beschreibung

Die vorliegende Erfindung betrifft einen Hydraulikzylinder mit einer Leitungsbruchsicherung. Die Leitungsbruchsicherung ist angrenzend an einen Innenraum des Hydraulikzylinders, beispielsweise in einer Verbindungsleitung zwischen einem Anschluss für den Hydraulikzylinder und einem Anschluss zu einer Hydraulikeinheit vorgesehen.

Leitungsbruchsicherungen, auch Rohrbruchsicherungen genannt, gehören zu einer Gruppe von Sperrventilen, die beispielsweise direkt am Zylinder montiert sind. Sie verhindern eine unkontrollierte Zylinderbewegung im Fall eines Rohrbruchs oder eines Schlauchabrisses. In einer üblichen Ausgestaltung bewirken größere Volumenströme, dass ein mit Federkraft vom Ventilsitz abgehobenes Ventilplättchen durch die Strömungskräfte auf seinen Sitz gedrückt wird und so das Ventil verschließt. Auch kann vorgesehen sein, dass eine Blendenbohrung im Ventilplättchen vorgesehen ist, die einen geringen Volumenstrom in Sperrrichtung erlaubt. Die Strömungskräfte, die zum Schließen des Ventils führen, können als eine Druckdifferenz an dem Ventilplättchen angesehen werden, wobei der Druck stromaufwärts, also auf der Seite des Hubzylinders größer als der Druck stromabwärts ist, so dass die daraus resultierende Druckdifferenz eine stromabwärts gerichtete Kraft erzeugt, die zu einem Ansprechen der Leitungsbruchsicherung führt.

Als nachteilig an bekannten Leistungsumbruchsicherungen, insbesondere für Flurförderzeuge hat sich herausgestellt, dass die Druckdifferenz, bei der die Leitungsbruchsicherung anspricht fest vorgegeben ist und so die Einsatzmöglichkeiten begrenzt sind.

Der Erfindung liegt die Aufgabe zugrunde, einen Hydraulikzylinder mit einer flexibel einsetzbaren Leitungsbruchsicherung bereitzustellen.

Aus DD 19369 ist ein einstellbares Drossel- und Rohrbruchventil bekannt geworden, das eine Schraubenfeder aufweist, die mit einem Ende auf einem Ventilunterteil aufsitzt und mit ihrem anderen Ende an einem Federteller anliegt, wobei über eine Einstellschraube die Position des Federtellers und damit die auf das Ventilunterteil wirkende Kraft der Feder einstellbar ist.

Aus WO 02/16813A1 ist ein Hydraulikventil mit einem Ventilgehäuse bekannt geworden, das einen im Wesentlichen zylindrischen Gehäuseinnenraum aufweist, der durch einen Ventilteller verschließbar ist. Der Ventilteller greift mit seinem Kegelrand an der stirnseitigen Kante des Gehäuseinnenraums an, wobei ein Einsatzkörper in einem Absatz des Gehäuseinnenraums angeordnet und als im Querschnitt zahnradförmige Körper mit kreisförmigen Zahnlücken ausgebildet ist. Die kreisförmigen Zahnlücken bilden mit der Gehäuseinnenwand Ventildurchgänge.

CN 104006195 A beschreibt ein explosionssicheres Ventil für eine Hubmaschine, bei dem ein Ventilteller über eine Feder in eine freigegebene Position vorgespannt ist.

Aus CN 106402087 A ist ein Explosionsschutz für einen Hydraulikzylinder bekannt, der in eine freigegebene Stellung vorgespannt ist.

Aus CN 105240331 A ist eine Ventilanordnung bekannt, bei der ein auf einem Schaft angeordneter Ventilteller beweglich in einem Ventilinnenraum angeordnet ist.

Aus US 3,228,658 ist ein Rückschlagventil bekannt, bei dem eine den Rückfluss verhindernde Kugel von einer Feder in eine den Durchlass freigebende Position vorgespannt ist.

Der Erfindung liegt die Aufgabe zugrunde eine flexibel einsetzbare Leitungsbruchsicherung bereitzustellen.

Erfindungsgemäß wird die Aufnahme durch einen Hydraulikzylinder mit den Merkmalen aus Anspruch 1 gelöst. Vorteilhafte Ausgestaltungen bilden die Gegenstände der Unteransprüche.

Erfindungsgemäß ist ein Hydraulikzylinder mit einer Leitungsbruchsicherung vorgesehen.

Der Hydraulikzylinder besitzt einen Innenraum, in dem der Kolben hydraulisch bewegt werden kann. Die Leitungsbruchsicherung besitzt eine federvorgespannte Verschlusseinheit, die angrenzend an den Innenraum des Hydraulikzylinders angeordnet ist. Die Verschlusseinheit ist in eine freigebende Stellung vorgespannt, so dass ein Volumenstrom über die Verschlusseinheit fließen kann. Bei Übersteigen einer Druckdifferenz an der Verschlusseinheit schließt diese mindestens teilweise. Die erfindungsgemäße Leitungsbruchsicherung besitzt eine bewegliche Stelleinrichtung, deren Stellung relativ zu der Verschlusseinheit die Federvorspannung in die freigebende Stellung der Verschlusseinheit einstellt. Mit der Federvorspannung stellt sich die erforderliche Druckdifferenz für das mindestens teilweise Schließen der Verschlusseinheit ein. Die Verwendung einer beweglichen Stelleinrichtung erlaubt es, über deren Stellung im Betrieb die Federvorspannung einzustellen. Durch eine einstellbare Federvorspannung kann erreicht werden, dass die erforderliche Druckdifferenz für das mindestens teilweise Verschließen der Verschlusseinheit einstellbar ist. Die erfindungsgemäß vorgesehene bewegliche Stelleinrichtung ist erfindungsgemäß während des Betriebs verschieblich. Hierdurch entsteht eine große Flexibilität beim Einsatz und der Anwendung der Leitungsbruchsicherung, da durch das Stellen der Stelleinrichtung die Druckdifferenz und damit auch der Ansprechpunkt der Leitungsbruchsicherung auch im montierten Zustand eingestellt werden kann.

Erfindungsgemäß nimmt die bewegliche Stelleinrichtung ihre Stellung relativ zu der Verschlusseinheit, abhängig von dem Druck in dem Innenraum des Hydraulikzylinders, ein. Der Druck wirkt hierbei wie eine Kraft auf die bewegliche Stelleinrichtung, die unter Einwirkung der Kraft eine Stellung relativ zu der Verschlusseinheit einnimmt. Auf diese Weise entsteht eine druck- und/oder lastabhängige Leitungsbruchsicherung.

In einer bevorzugten Ausgestaltung besitzt die Stelleinrichtung einen beweglichen Kurvenstößel, der einen mit der federvorgespannten Verschlusseinheit zusammenwirkenden Kurvenabschnitt aufweist. Der Kurvenabschnitt setzt eine Bewegung des Kurvenstößels in eine Vorspannung der Verschlusseinheit durch die Feder um.

Bevorzugt besitzt die Stelleinrichtung ein mit dem dem Innenraum des Hydraulikzylinders zusammenwirkendes Wirkende, das abhängig von dem Druck in dem Innenraum des Hydraulikzylinders die Stellung der Stelleinrichtung und damit insbesondere des Kurvenabschnitts bestimmt. Auf diese Weise kann für die Leitungsbruchsicherung realisiert werden, dass diese abhängig von dem

Druck in dem Innenraum des Hydraulikzylinders die Druckdifferenz für ihr Ansprechen festlegt. Verschiedene funktionale Zusammenhänge zwischen Druck in dem Hydraulikzylinder und Druckdifferenz für das Ansprechen der Leistungsbruchsicherung können über den Kurvenabschnitt realisiert werden.

In einer bevorzugten Ausgestaltung ist die Stelleinrichtung in eine Position durch eine weitere Feder vorgespannt, in der die Druckdifferenz für das mindestens teilweise Verschließen der Verschlusseinheit maximal ist. Diese federvorgespannte Position nimmt die Stelleinrichtung ein, wenn in dem Innenraum des Hydraulikzylinders ein geringer oder kein Druck auf die Stelleinrichtung wirkt. Die maximale Druckdifferenz bedeutet hier, dass ohne zusätzlichen Druck aus dem Innenraum des Hydraulikzylinders die Leitungsbruchsicherung spät anspricht, d.h. bei einer großen Druckdifferenz und einem großen Volumenstrom über die Verschlusseinheit erst anspricht.

In einer zweckmäßigen Weiterführung ist vorgesehen, dass die Stelleinrichtung mit zunehmendem

Druck in dem Hydraulikzylinder über ihr Wirkende zunehmend gegen die Kraft der weiteren Feder eine Position einnimmt, in der die Druckdifferenz für das mindestens teilweise Verschließen kleiner als die maximale Druckdifferenz ist. Dies bedeutet, dass bei einem größeren Druck im Innenraum des Hydraulikzylinders eine kleinere als die maximale Druckdifferenz für ein Ansprechen der Leitungsbruchsicherung genügt. Die Leitungsbruchsicherung spricht früher an, d.h. bei einer kleinen Druckdifferenz und einem kleinen Volumenstrom über die Verschlusseinheit.

In einer erfindungsgemäßen Weiterbildung ist vorgesehen, dass die Druckdifferenz für das mindestens teilweise Schließen der Verschlusseinheit sich abhängig von einem Druck in dem Hydraulikzylinder stufenlos einstellen lässt. Der Druck in dem Hydraulikzylinder wirkt dabei über das Wirkende der Stelleinrichtung gegen die Kraft der weiteren Feder und erlaubt somit, bei auftretendem Kräftegleichgewicht an der Stelleinrichtung über deren Stellung die Druckdifferenz einzustellen.

Dabei ist zweckmäßigerweise vorgesehen, dass für einen Druck gleich oder größer als ein vorbestimmter Grenzdruck in dem Hydraulikzylinder eine minimale Druckdifferenz für das teilweise Verschließen der Verschlusseinheit ausreicht. Dies bedeutet wenn der Druck in dem Hydraulikzylinder den vorbestimmten Grenzdruck überschreitet, dass dann stets eine minimale Druckdifferenz für ein teilweises Verschließen der Verschlusseinheit ausreicht. Umgekehrt bedeutet dies, dass bei einem Druck in dem Innenraum des Hydraulikzylinders kleiner als der vorbestimmte Grenzdruck auch Druckdifferenzen auftreten können, die größer als die minimale Druckdifferenz sind, ohne dass die Verschlusseinheit auslöst.

In einer bevorzugten Ausgestaltung besteht die Verschlusseinheit aus einer Verschlussplatte, die durch die Feder gegen einen Anschlag in eine freigebende Stellung vorgespannt und durch einen Druck in dem Hydraulikzylinder in eine sperrende Position gedrückt wird, wenn die durch die Feder vorgegebene Druckdifferenz überschritten ist. Die die Verschlussplatte stellende Kraft ergibt sich aus der Differenz der auf Ober- und Unterseite wirkenden Drücke.

In einer bevorzugten Ausgestaltung ist die die Verschlussplatte gegen den Anschlag spannende Feder auf einem Stößel angeordnet, dessen von der Feder fortweisendes Ende mit der Stelleinrichtung zusammenwirkt. Grundsätzlich könnte die Feder auch direkt mit der Stelleinrichtung zusammenwirken, die Zwischenschaltung eines Stößels erlaubt jedoch hier eine definierte Positionierung der Feder und der damit verbundenen Federvorspannung für die Verschlussplatte.

Bevorzugt ist das Fußende des die Feder der Verschlusseinheit spannenden Stößels auf einem Kurvenabschnitt der Stelleinrichtung gelagert und kann sich auf diesem verschieblich bewegen. Die Stelleinrichtung besitzt bevorzugt ein in den Innenraum des Hydraulikzylinders vorstehendes Wirkende, das bevorzugt den Druck in dem Innenraum erfasst und von diesem in seiner Position eingestellt wird. In einer zweckmäßigen Ausgestaltung ist der Kurvenabschnitt kegelförmig ausgebildet.

Der Hydraulikzylinder eignet sich insbesondere zur Verwendung als hydraulischen Hubzylinder eines Flurförderzeugs. Bevorzugt kann in einem solchen Flurförderzeug der Grenzdruck der Leitungsbruchsicherung so gewählt werden, dass dieser dem Druck im Innenraum des Hydraulikzylinders bei Nennlast entspricht. Dies führt dazu, dass bei einer Belastung des Hubzylinders mit Nennlast oder mit einer höheren Last die Leitungsbruchsicherung bei einer minimalen Druckdifferenz anspricht. Diese minimale Druckdifferenz bei Nennlast bestimmt dann die maximale Senkgeschwindigkeit des Hubzylinders. Ist der Hubzylinder dagegen nicht mit Nennlast belastet, so können auch größere Senkgeschwindigkeiten auftreten, ohne dass die Leitungsbruchsicherung anspricht.

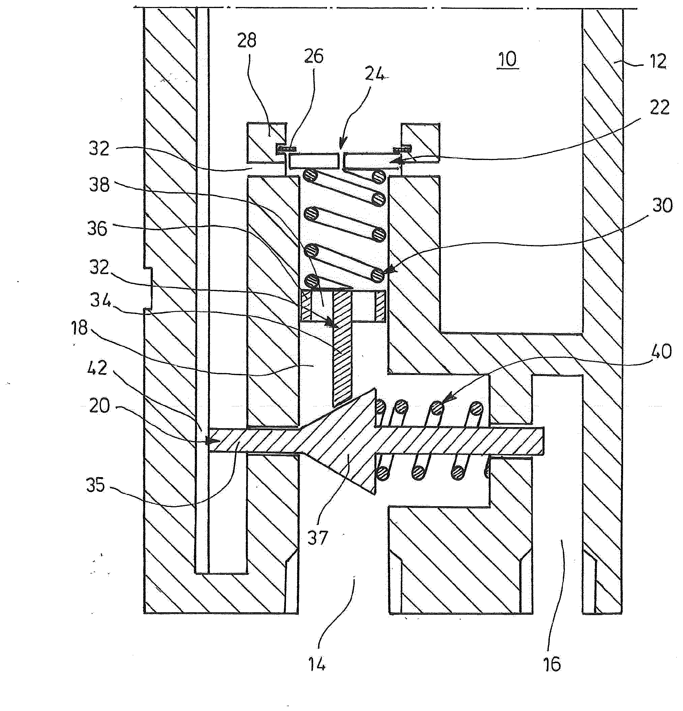

Die vorliegende Erfindung wird anhand eines Ausführungsbeispiels näher erläutert. Die einzige Figur zeigt eine Schnittansicht eines Hydraulikzylinders in seinem Fußbereich. Der Innenraum 10 des Hydraulikzylinders ist von einer zylindrischen Wandung 12 umgeben. Im Fußbereich ist eine Austrittsleitung 14 vorgesehen, über die eine Hydraulikflüssigkeit aus dem Zylinderinnenraum 10 über eine Verbindungsleitung 18 austreten kann. Eine weitere Leitung ist als Leckleitung 16 für das Hydraulikfluid im Zusammenhang mit einem Kurvenstößel 20 vorgesehen. Der Kurvenstößel 20 bildet die Stelleinrichtung der Leitungsbruchsicherung.

Die Leitungsbruchsicherung besitzt eine Verschlussplatte 22, die in der Verbindungsleitung 18 angrenzend an den Innenraum 10 des Hydraulikzylinders angeordnet ist. Die Verschlussplatte 22 besitzt eine zentrale Bohrung 24, die ein Abfließen des Hydraulikfluids auch in einer geschlossenen Position der Verschlussplatte 22 sicherstellt. In der dargestellten Position ist die Verschlussplatte 22 gegen einen Anschlag 26 gedrückt. Der Anschlag 26 wird von einem umlaufenden Ring gebildet, der in einem Verschlusssitz 28 angeordnet ist. Die Verschlussplatte 22 wird durch eine Feder 30 gegen den Anschlag 26 vorgespannt. Hierdurch wird die Verbindungsleitung 18 über die Verbindungskanäle 32 freigegeben. Die Verbindungskanäle 32 sind in radialer Richtung in den Verschlusssitz 28 eingebracht.

Die Verschlussplatte 22 zusammen mit der Feder 30 arbeiten wie eine herkömmliche Leitungsbruchsicherung: Tritt ein Leitungsbruch an dem Anschluss 14 aus, so wird eine unkontrollierte Bewegung des Kolbens (nicht dargestellt) in dem Hydraulikzylinder verhindert, da die Verschlussplatte 22 gegen die Federkraft 30 in den Verschlusssitz 28 gedrückt wird. In diesem Fall kann lediglich über die zentrale Bohrung 24 das Hydraulikfluid austreten, was zu einem langsamen Absinken führt. Im Falle eines Leitungsbruchs ist die Strömungsgeschwindigkeit des Hydraulikfluids an der Verschlussplatte so groß, d.h. die Druckdifferenz zwischen stromaufwärts und stromabwärts liegender Seite der Verschlussplatte ist so groß, dass die Verschlussplatte in die sperrende Position gegen die Kraft der Feder 30 gedrückt wird.

**In** der erfindungsgemäßen Ausgestaltung ist ein Stößel 32 vorgesehen, der einen Stößelschaft 34 und einen Stößelkopf 36 besitzt. Der Stößelkopf 36 besitzt eine oder mehrere Durchgangsbohrungen 38, durch die das Hydraulikfluid in der Verbindungsleitung 18 fließt. Auf dem Stößelkopf 36 sitzt die Feder 30 auf. Durch die Stellung des Stößels 32 in der Verbindungsleitung 18 wird die Feder 30 relativ zu der Verschlussplatte 22 gestellt, wodurch die erforderliche Druckdifferenz zum Schließen der Verschlussplatte 22 bestimmt wird. Je näher der Stößel 32 zu der Verschlussplatte 22 steht umso größer ist die Federvorspannung, mit der die Verschlussplatte 22 gegen den Anschlag 26 gedrückt wird. Die Druckdifferenz für das Verstellen der Verbindungsleitung 28 wird hierdurch größer, d.h. der Druck im Zylinderinnenraum 10 muss im Falle eines Leitungsbruchs größer sein, damit die Leitungsbruchsicherung 22 anspricht.

Wird dagegen der Stößel 32 weiter entfernt von der Verschlussplatte 22 eingestellt, so reduziert sich die Federspannung der Feder 30 und die Leitungsbruchsicherung spricht früher, also bei einer geringeren Druckdifferenz an. Der Stößel 32 stützt sich mit seinem Schaft 34 auf einem Kurvenstößel 20 ab. Der Kurvenstößel 20 besitzt einen Schaft 35 und einen Kurvenabschnitt 37. Der Kurvenabschnitt 37 ist kegelförmig ausgestaltet. Der Kurvenstößel 20 ist durch eine Feder 40 in eine Position vorgespannt, in der der Stößel 32 relativ nahe zu der Verschlussplatte 22 gestellt ist und die Federvorspannung maximal ist.

Der Schaft 35 reicht in den Zylinderinnenraum hinein und bildet dort ein Wirkende 42. Über den Druck des Hydraulikfluids in dem Zylinderinnenraum 10 wird der Kurvenstößel 20 gegen die Federkraft der Feder 40 gestellt, so dass über den Kurvenabschnitt 38 der Stößel 22 und damit die Druckdifferenz für das Ansprechen der Verschlussplatte 22 gestellt wird. Die Kegelspitze des Kurvenabschnitts 37 weist zudem Wirkende 42. Hierdurch entsteht eine druckabhängige Leitungsbruchsicherung für den Hydraulikzylinder.

Die Leckleitung 16 ist vorgesehen, um aus der Verbindungsleitung 18 über die federseitige Lagerung des Kurvenstößels 20 austretendes Hydraulikfluid aufzufangen.

Eine besondere Einsatzmöglichkeit für eine druckabhängig gesteuerte Leitungsbruchsicherung ergibt sich bei Flurförderzeugen und hier insbesondere in einem Hubgerüst. Neben der Verwendung in dem Hubgerüst kann die erfindungsgemäße Leitungsbruchsicherung auch für einen Lastzylinder eingesetzt werden. Bei der Verwendung in einem Hubgerüst, sind mehrere Hubmasten vorgesehen, die über einen Masthubzylinder gegeneinander teleskopierbar sind. Ferner besitzt das Hubgerüst auch einen Freihubzylinder, mit dem ein Lasttragemittel angehoben wird. **In** der Regel sind sämtliche Hydraulikzylinder eines Hubgerüsts mit einer Leitungsbruchsicherung ausgestattet, die bei einer vorgegebenen Senkgeschwindigkeit ansprechen. Die Senkgeschwindigkeit wird für den Fall der Nennlast durch eine Norm vorgegeben; beispielsweise auf 0,6 m s⁻¹. Mithilfe einer druckabhängigen Leitungsbruchsicherung besteht die Möglichkeit, bei einem nicht mit Nennlast beladenen Hubgerüst oder einem leeren Hubgerüst eine größere Senkgeschwindigkeit vorzusehen. Durch einen großen Druck im Innenraum des Hydraulikzylinders wird der Kurvenstößel 20 so gestellt, dass die Verschlussplatte 22 bereits bei einer geringen Druckdifferenz in ihre verschließende Position gedrückt wird. Dies gibt dann die Senkgeschwindigkeit für die Nennlast vor. Ist die Last geringer als Nennlast, so wird über die Feder 40 der Stößel 32 näher zur Verschlussplatte 22 gestellt und die Verschlussplatte 22 spricht erst bei einer größeren Senkgeschwindigkeit oder Druckdifferenz an, um die Verbindungsleitung 18 zu schließen.

### Bezugszeichenliste

- 10: Innenraum
- 12: Wandung
- 14: Austrittsleitung
- 16: Leckleitung
- 18: Verbindungsleitung
- 20: Stelleinrichtung, insbesondere Kurvenstößel
- 22: Verschlussleitung
- 24: Bohrung
- 26: Anschlag
- 28: Verschlusssitz
- 30: Feder/Federkraft
- 32: Stößel
- 34: Schaft
- 35: Schaft
- 36: Stößelkopf
- 37: Kurvenabschnitt
- 38: Kurvenabschnitt
- 40: Feder

## Patentansprüche

1. Hydraulikzylinder mit einer Leitungsbruchsicherung, die eine in einer Verbindungsleitung (18) angrenzend an einen Innenraum (10) des Hydraulikzylinders angeordnete Verschlusseinheit (24) aufweist, die über eine Feder (30) in eine freigebende Stellung vorgespannt ist, bei der ein Volumenstrom über die Leitungsbruchsicherung fließen kann, wobei die Verschlusseinheit bei Übersteigen einer Druckdifferenz an der Verschlusseinheit mindestens teilweise schließt, wobei eine bewegliche Stelleinrichtung (20) vorgesehen ist, deren Stellung relativ zu der Verschlusseinheit (24) die Vorspannung der Feder (30) in die freigebende Position und damit die erforderliche Druckdifferenz für das mindestens teilweise Schließen der Verschlusseinheit vorgibt, **dadurch gekennzeichnet, dass** die bewegliche Stelleinrichtung (20) sich in ihre Stellung abhängig von dem Druck in dem Innenraum (10) des Hydraulikzylinders stellt.

2. Hydraulikzylinder nach Anspruch 1, **dadurch gekennzeichnet, dass** die Stelleinrichtung einen verschieblichen Kurvenstößel mit einem mit der federvorgespannten Verschlusseinheit zusammenwirkenden Kurvenabschnitt (37) aufweist.

3. Hydraulikzylinder nach Anspruch 1 oder 2, **dadurch gekennzeichnet, dass** die Stelleinrichtung (20) ein mit dem Hydraulikzylinder zusammenwirkendes Wirkende (42) aufweist, das abhängig von dem Druck in dem Innenraum des Hydraulikzylinders die Stellung der Stelleinrichtung (20) bestimmt.

4. Hydraulikzylinder nach einem der Ansprüche 1 bis 3, **dadurch gekennzeichnet, dass** die Stelleinrichtung (20) bei fehlendem oder geringem Druck in dem Innenraum des Hydraulikzylinders in eine Position durch eine weitere Feder (40) vorgespannt ist, in der die Druckdifferenz für das mindestens teilweise Schließen der Verschlusseinheit maximal ist.

5. Hydraulikzylinder nach Anspruch 4 und 3, **dadurch gekennzeichnet, dass** mit zunehmendem Druck in dem Innenraum des Hydraulikzylinders die Stelleinrichtung (20) über ihr Wirkende (42) gegen eine Kraft der weiteren Feder (40) eine Position einnimmt, in der die Druckdifferenz für das mindestens teilweise Schließen kleiner als die maximale Druckdifferenz ist.

6. Hydraulikzylinder nach einem der Ansprüche 1 bis 5, **dadurch gekennzeichnet, dass** die Druckdifferenz für das mindestens teilweise Schließen sich abhängig von einem Druck in dem Innenraum des Hydraulikzylinders stufenlos einstellt.

7. Hydraulikzylinder nach Anspruch 6, **dadurch gekennzeichnet, dass** ein vorbestimmter Grenzdruck vorgesehen ist und für einen Druck im Innenraum des Hydraulikzylinders größer als der vorbestimmte Grenzdruck genügt eine minimale Druckdifferenz für das teilweise Schließen der Verschlusseinheit.

8. Hydraulikzylinder nach einem der Ansprüche 1 bis 7, **dadurch gekennzeichnet, dass** die Verschlusseinheit eine Verschlussplatte aufweist, die durch die Feder (30) gegen einen Anschlag (26) in eine freigebende Stellung vorgespannt und durch einen Druck in dem Innenraum des Hydraulikzylinders in eine sperrende Position gedrückt wird, wenn die durch die Feder (30) vorgegebene Druckdifferenz überschritten ist.

9. Hydraulikzylinder nach Anspruch 8, **dadurch gekennzeichnet, dass** die die Verschlussplatte gegen den Anschlag (26) spannende Feder (30) auf einem Stößel sitzt, dessen von der Feder (30) fortweisendes Fußende mit der Stelleinrichtung (20) zusammenwirkt.

10. Hydraulikzylinder nach Anspruch 9, **dadurch gekennzeichnet, dass** das Fußende auf einem Kurvenabschnitt (38) der Stelleinrichtung (20) gelagert ist.

11. Hydraulikzylinder nach Anspruch 10, **dadurch gekennzeichnet, dass** der Kurvenabschnitt (38) der Stelleinrichtung kegelförmig ausgebildet ist.

12. Hydraulikzylinder nach Anspruch 3 oder 5, **dadurch gekennzeichnet, dass** ein Schaft (35) der Stelleinrichtung (20) in den Innenraum des Hydraulikzylinders als Wirkende vorsteht.

13. Flurförderzeug mit mindestens einem Hydraulikzylinder nach einem der vorstehenden Ansprüche.

14. Flurförderzeug nach Anspruch 13, **dadurch gekennzeichnet, dass** der Grenzdruck einer Belastung des Hydraulikzylinders mit Nennlast entspricht.

## Claims

1. A hydraulic cylinder having a line break safety feature which comprises a closure unit (24) that is arranged in a connection line (18) adjacent to an interior space (10) of the hydraulic cylinder and that is biased into a releasing position by means of a spring (30), in which releasing position a volume flow can flow through the line break safety feature, wherein the closure unit at least partially closes when a pressure difference at the closure unit is exceeded, wherein a movable adjusting apparatus (20) is provided, the position of which relative to the closure unit (24) defines the biasing of the spring (30) into the releasing position and thus the required pressure difference for the at least partial closing of the closure unit, **characterized in that** the movable adjusting apparatus (20) assumes its position depending on the pressure in the interior space (10) of the hydraulic cylinder.

2. The hydraulic cylinder according to claim 1, **characterized in that** the adjusting apparatus comprises a displaceable cam follower having a cam portion (37) that cooperates with the spring-biased closure unit.

3. The hydraulic cylinder according to claim 1 or 2, **characterized in that** the adjusting apparatus (20) comprises an active end (42) that cooperates with the hydraulic cylinder and that determines the position of the adjusting apparatus (20) depending on the pressure in the interior space of the hydraulic cylinder.

4. The hydraulic cylinder according to one of claims 1 to 3, **characterized in that** the adjusting apparatus (20), if the pressure in the interior space of the hydraulic cylinder is low or absent, is biased by means of a further spring (40) into a position in which the pressure difference for the at least partial closing of the closure unit is at its maximum.

5. The hydraulic cylinder according to claim 4 and 3, **characterized in that**, with increasing pressure in the interior space of the hydraulic cylinder, the adjusting apparatus (20), via the active end (42) thereof counter to a force of the further spring (40), assumes a position in which the pressure difference for the at least partial closing is less than the maximum pressure difference.

6. The hydraulic cylinder according to one of claims 1 to 5, **characterized in that** the pressure difference for the at least partial closing is infinitely variable depending on a pressure in the interior space of the hydraulic cylinder.

7. The hydraulic cylinder according to claim 6, **characterized in that** a predetermined limit pressure is provided and, for a pressure in the interior space of the hydraulic cylinder that is greater than the predetermined limit pressure, a minimum pressure difference is sufficient for the partial closing of the closure unit.

8. The hydraulic cylinder according to one of claims 1 to 7, **characterized in that** the closure unit comprises a closure plate that is biased into a releasing position against a stop (26) by means of the spring (30) and that is pressed into a locking position by means of a pressure in the interior space of the hydraulic cylinder if the pressure difference defined by the spring (30) is exceeded.

9. The hydraulic cylinder according to claim 8, **characterized in that** the spring (30) that tensions the closure plate against the stop (26) rests on a follower of which the foot end pointing away from the spring (30) cooperates with the adjusting apparatus (20).

10. The hydraulic cylinder according to claim 9, **characterized in that** the foot end is mounted on a cam portion (38) of the adjusting apparatus (20).

11. The hydraulic cylinder according to claim 10, **characterized in that** the cam portion (38) of the adjusting apparatus is conical.

12. The hydraulic cylinder according to claim 3 or 5, **characterized in that** a shaft (35) of the adjusting apparatus (20) projects into the interior space of the hydraulic cylinder as the active end.

13. An industrial truck having at least one hydraulic cylinder according to one of the preceding claims.

14. The industrial truck according to claim 13, **characterized in that** the limit pressure corresponds to a loading of the hydraulic cylinder with a nominal load.

## Revendications

1. Cylindre hydraulique doté d'un dispositif de sécurité anti-rupture, lequel présente une unité de fermeture (24) disposée dans une conduite de raccordement (18) de façon adjacente à un espace intérieur (10) du cylindre hydraulique, laquelle est précontrainte par le biais d'un ressort (30) dans une position de libération dans laquelle un flux volumique peut s' écouler par le biais du dispositif de sécurité anti-rupture, dans lequel l'unité de fermeture se ferme au moins partiellement en cas de dépassement d'une différence de pression au niveau de l'unité de fermeture, dans lequel il est prévu un système de réglage mobile (20) dont la position par rapport à l'unité de fermeture (24) définit la précontrainte du ressort (30) dans la position de libération et par conséquent la différence de pression nécessaire pour la fermeture au moins partielle de l'unité de fermeture, **caractérisé en ce que** le système de réglage mobile (20) se place dans sa position en fonction de la pression dans l'espace intérieur (10) du cylindre hydraulique.

2. Cylindre hydraulique selon la revendication 1, **caractérisé en ce que** le système de réglage présente un poussoir à courbe déplaçable avec une section de courbe (37) coopérant avec l'unité de fermeture précontrainte par ressort.

3. Cylindre hydraulique selon la revendication 1 ou 2, **caractérisé en ce que** le système de réglage (20) présente une extrémité active (42) coopérant avec le cylindre hydraulique, laquelle détermine la position du système de réglage (20) en fonction de la pression dans l'espace intérieur du cylindre hydraulique.

4. Cylindre hydraulique selon l'une des revendications 1 à 3, **caractérisé en ce que** le système de réglage (20), en cas de pression manquante ou faible dans l'espace intérieur du cylindre hydraulique, est précontrainte par un ressort supplémentaire (40) dans une position dans laquelle la différence de pression pour la fermeture au moins partielle de l'unité de fermeture est maximale.

5. Cylindre hydraulique selon les revendications 4 et 3, **caractérisé en ce que** lors d'une augmentation de pression dans l'espace intérieur du cylindre hydraulique, le système de réglage (20) prend une position, par le biais de son extrémité active (42) contre une force du ressort supplémentaire (40), dans laquelle la différence de pression pour la fermeture au moins partielle est inférieure à la différence de pression maximale.

6. Cylindre hydraulique selon l'une des revendications 1 à 5, **caractérisé en ce que** la différence de pression pour la fermeture au moins partielle se règle de façon continue en fonction d'une pression dans l'espace intérieur du cylindre hydraulique.

7. Cylindre hydraulique selon la revendication 6, **caractérisé en ce qu'**il est prévu une pression limite prédéterminée et **en ce que** pour une pression supérieure à la pression limite prédéterminée dans l'espace intérieur du cylindre hydraulique, une différence de pression minimale suffit pour la fermeture partielle de l'unité de fermeture.

8. Cylindre hydraulique selon l'une des revendications 1 à 7, **caractérisé en ce que** l'unité de fermeture présente une plaque de fermeture, laquelle est précontrainte dans une position de libération contre une butée (26) par le ressort (30) et poussée vers une position de verrouillage par une pression dans l'espace intérieur du cylindre hydraulique lorsque la différence de pression prédéfinie par le ressort (30) est dépassée.

9. Cylindre hydraulique selon la revendication 8, **caractérisé en ce que** le ressort (30) précontraignant la plaque de fermeture contre la butée (26) repose sur un poussoir, dont l'extrémité de pied opposée au ressort (30) coopère avec le système de réglage (20).

10. Cylindre hydraulique selon la revendication 9, **caractérisé en ce que** l'extrémité de pied est montée sur une section de courbe (38) du système de réglage (20).

11. Cylindre hydraulique selon la revendication 10, **caractérisé en ce que** la section de courbe (38) du système de réglage est conçue en forme de cône.

12. Cylindre hydraulique selon la revendication 3 ou 5, **caractérisé en ce qu'**un arbre (35) du système de réglage (20) fait saillie en tant qu'extrémité active dans l'espace intérieur du cylindre hydraulique.

13. Chariot élévateur doté d'au moins un cylindre hydraulique selon l'une des revendications précédentes.

14. Chariot élévateur selon la revendication 13, **caractérisé en ce que** la pression limite correspond à une charge du cylindre hydraulique avec une charge nominale.
